# EUROPÄISCHE PATENTSCHRIFT

(11) **EP 1 112 711 B1**
(45) Veröffentlichungstag und Bekanntmachung des Hinweises auf die Patenterteilung: **18.02.2004**
(21) Anmeldenummer: 00122567.1
(22) Anmeldetag: 17.10.2000
(51) Int. Cl.: A47J 31/58, A47J 31/54

(54) **Einrichtung zur Anzeige des Verkalkungszustands von Durchlauferhitzern, insbesondere von Espressomaschinen**
Unit for indicating the calcification status of continuous flow heaters, in particular in Espresso coffee machines
Unité d'indication du degré de calcification de chauffe-eau continu, en particulier pour des machines à café espresso

(30) Priorität: 31.12.1999 DE 29923063 U
(43) Veröffentlichungstag der Anmeldung: 04.07.2001
(73) Patentinhaber: Eugster/Frismag AG, CH-8590 Romanshorn (CH)
(72) Erfinder: Fischer, Daniel, CH-8590 Romanshorn (CH)
(74) Vertreter: Schubert, Siegmar, Dipl.-Ing.

(56) Entgegenhaltungen:
- DE-A- 2 621 159
- DE-A- 2 652 375
- DE-A- 2 655 669
- DE-B- 2 525 647
- US-A- 4 122 763

## Beschreibung

Die Erfindung betrifft eine Einrichtung zur Anzeige des Verkalkungszustands von Durchlauferhitzern, insbesondere von Espressomaschinen, nach dem Oberbegriff des Anspruchs 1.

Im Betrieb eines derartigen Durchlauferhitzers wird mittels einer Pumpe Wasser aus einem Kaltwasserbehälter durch den Kaltwassereinlaß und sich daran anschließende indirekt beheizte Rohre des Durchlauferhitzers geleitet, dort erhitzt, wonach das Heißwasser oder Brühwasser einen Heißwasserauslaß des Durchlauferhitzers verläßt und in eine Brühvorrichtung gepumpt wird. In dem auch als Thermoblock bezeichneten Durchlauferhitzer wird das Wasser auf ca. 96 °C erhitzt. Insbesondere in dem Fall, in dem das Kaltwasser einen hohen Härtegrad aufweist, setzt sich nach einer von dem Härtegrad abhängigen Betriebszeit Kalk in den beheizten Rohren - auch Durchlaufrohre genannt - Kesselstein ab. Der Kesselstein verengt zunehmend den lichten Querschnitt der Durchlaufrohre, wodurch sich deren Wirkungsgrad verschlechtert und die Funktion des Durchlauferhitzers insgesamt bis zu einer Blockade des Durchlauferhitzers eingeschränkt wird. Die Funktionstüchtigkeit des Durchlauferhitzers kann zwar durch Einsatz handelsüblicher Entkalkungsmittel wiederhergestellt werden, dies ist jedoch ein zusätzlicher, verhältnismäßig umständlicher Vorgang, der schon deswegen gerne hinausgeschoben wird. Daher wurden bereits Anzeigen vorgesehen, die sinnfällig darstellen sollen, wann eine Entkalkung tatsächlich erforderlich ist.

Im einzelnen sind als Anzeigeeinrichtung Zählwerke bekannt, welche die Anzahl von Wasserdurchläufen durch den Durchlauferhitzer anzeigen. Da die Durchlaufmengen zur Zubereitung eines Getränks in einem vorgegebenen Bereich liegen, kann unter Berücksichtigung des örtlichen Härtegrads des Wassers ein Erfahrungwert gefunden werden, nach wievielen angezeigten Durchläufen eine Entkalkung durchzuführen ist. Diese Einrichtung läßt jedoch nur ungenaue Ergebnisse und Annäherungen an den tatsächlichen Verkalkungszustand erwarten.

Mit einem zum Stand der Technik gehörenden thermischen Meßsystem wird zur Abschätzung des Verkalkungszustands des Durchlauferhitzers dessen Körperaußentemperatur gemessen, da diese Temperatur mit zunehmender Verkalkung ansteigt, denn die erzeugte Wärme wird durch das durch die Durchlaufrohre strömende Wasser mit zunehmender, wärmeisolierender Kalkschicht schlechter abgeführt. Diese thermische Meßeinrichtung arbeitet aber ebenfalls ungenau, da die an dem Durchlauferhitzer meßbare Außentemperatur von weiteren Parametern abhängt, insbesondere von vorangegangenen Brühwasserzubereitungen, wenn die dadurch bedingte äußere Erwärmung des Durchlauferhitzers noch nicht ganz abgeklungen ist, bevor ein neuer Brühvorgang mit Körperaußentemperaturerfassung beginnt.

Bekannt ist es auch, in die Zuleitung oder Ableitung des Durchlauferhitzers einen Strömungswächter einzufügen, der die Veränderung der Strömungsgeschwindigkeit, nämlich deren Verringerung mit zunehmender Verkalkung in den Durchlauferhitzer mißt. Ein solcher Strömungswächter ist jedoch für solche Anwendungsfälle wie bei kleinen Espressomaschinen, die insbesondere im Haushaltbereich eingesetzt werden sollen, technisch zu aufwendig.

Bei einer bekannten Haushaltskaffeemaschine bestehend aus Kaltwasserbehälter, Rückschlagventil, elektrischem Durchlauferhitzer, Steigrohr und Filtervorrichtung steht ein zwischen dem Rückschlagventil und einem Durchlauferhitzerausgang angeordneter Differenzdruckkraftmesser mit einer Verkalkungsanzeigevorrichtung in Wirkverbindung (DE-B 25 25 647). Als Verkalkungsanzeigevorrichtung ist ein optischer oder elektrischer Signalgeber vorgesehen. - Im normalen Betriebszustand bildet sich in dem Durchlauferhitzer ein Dampfpolster, wodurch das Rückschlagventil geschlossen und das erhitzte Wasser über das Steigrohr in das Kaffeefilter gedrückt wird. Der entstehende Dampfdruck ist abhängig von der Heizleistung, von der Höhe der Wassersäule im Steigrohr und dem Querschnitt der Auslauföffnung des Durchlauferhitzers. Durch Kalkablagerungen verringert sich die Ausflußgeschwindigkeit, wodurch der Dampfdruck bei gleicher Heizleistung im Durchlauferhitzer erhöht wird. Dieser Druckanstieg wird mit dem nur einseitig zwischen dem Rückschlagventil und dem Durchlauferhitzerausgang angeschlossenen Differenzdruckmesser erfaßt, der andererseits lediglich mit dem Atmosphärendruck beaufschlag werden kann. Da der erfaßte Druckanstieg auch von anderen Einflüssen wie der im Durchlauferhitzer wirksamen Heizleistung und der Höhe der Wassersäule im Steigrohr abhängt, ist die Verkalkungsanzeige nicht eindeutig. - Zumindest in Espressomaschinen, in denen das zu erhitzende Brühwasser mittels einer Pumpe zwangsweise durch den Durchlauferhitzer gepumpt wird, ist das bekannte Prinzip der einseitigen Dampfdruckerfassung zur Verkalkungsanzeige nicht brauchbar. Ansonsten können Differenzdruckkraftmesser in der Regel mit einer Membrane arbeiten, die in einem Wasserweg liegt und mit Wasser ständig beaufschlagt werden.

Der vorliegenden Erfindung liegt daher die Aufgabe zugrunde, eine Einrichtung zur Anzeige des Verkalkungszustands von Durchlauferhitzern zu schaffen, die technisch unkompliziert ist, aber gleichwohl eine Anzeige gestattet, die dem tatsächlichen Verkalkungszustand des Durchlauferhitzers weitgehend genau entspricht. Diese Anzeige soll ohne getrennte, nachfolgende Berücksichtigung weiterer Parameter wie des Härtegrads des Kaltwassers ein direktes Maß für den aktuellen Verkalkungszustand sein.

Diese Aufgabe wird für eine Einrichtung zur Anzeige des Verkalkuhgszustands von Durchlauferhitzern der eingangs genannten Gattung mit den in dem Anspruch 1 angegebenen Merkmalen gelöst.

Die Lösung beruht auf dem Prinzip, daß die Strömung durch den Durchlauferhitzer durch eine unkomplizierte Differenzdruckmeßdose erfaßt wird, in der durch eine Membran zwei Druckkammern voneinander abgetrennt werden, die gegenläufig auf die Membran einwirken. Von den Druckkammern steht die erste mit dem Kaltwassereinlaß des Durchlauferhitzers in fluidleitender Verbindung und die zweite Druckkammer mit dem Heißwasserauslaß des Durchlauferhitzers. Die im Betrieb des Durchlauferhitzers infolge der Druckdifferenz zwischen Kaltwassereinlaß und Heißwasserauslaß und damit in den Kammern sich einstellende Ausbiegung der Membran ist dabei ein Maß für den Strömungswiderstand in dem Durchlauferhitzer und damit dessen Verkalkung. Die Verformung der federnd nachgiebigen Membran kann selbst die Verkalkung des Durchlauferhitzers anzeigen, beispielsweise indem ein Abschnitt der Membran aus dem Gehäuse der Differenzdruckmeßdose herausragt. Vorzugsweise steht jedoch die Membran mit weiteren mechanischen Anzeigemitteln, wie einem Zeiger, der gegenüber festen Markierungen beweglich ist, oder mit elektrischen Anzeigemitteln, wie einer durch die Membran betätigten Leuchtanzeige (LED), in Verbindung, um die Entkalkungsnotwendigkeit zu signalisieren. Damit ist eine zuverlässige Entkalkungsanzeige geschaffen. Dabei ist zu berücksichtigen, daß erfahrungsgemäß der Differenzdruck bei einer Wasserhärte von ca. 20° nach Durchlauf von ca. 40 Litern durch den Durchlauferhitzer um ca. 1 bar ansteigt, womit eine deutliche Änderung des Zustands der Anzeigemittel herbeigeführt werden kann.

Besonders vorteilhaft ist die Membran als Federschnappscheibe ausgebildet, die derart dimensioniert ist, daß sie bei Erreichen eines vorgegebenen Differenzdrucks gleich einem maximal zulässigen Differenzdruck umschnappt. Dieses Umschnappen erfolgt also bei einem durch die Dimensionierung der Federschnappscheibe vorgegebenen Differenzdruck und berücksichtigt einen Differenzdrucktoleranzbereich, mit dem mögliche Druckbeeinflussungen durch eine in Grenzen variable Drosselwirkung eines Brühkopfs, der an den Heißwasserausgang des Durchlauferhitzers angeschlossen ist, berücksichtigt werden.

Zur Vermeidung von Restwasser in der Differenzdruckdose ist diese gemäß Anspruch 2 zweckmäßig oberhalb des Durchlauferhitzers mit annähernd lotrecht orientierter Membran angeordnet. Bei dieser Positionierung kann Restwasser aus den Kammern der Differenzdruckdose unter Schwerkraftwirkung abfließen. Außerdem wird das Restwasser durch einen entstehenden Unterdruck in dem Durchlauferhitzer und in dem Brühkopf nach Abschluß des Brühvorgangs abgesaugt.

Nach Anspruch 3 können gemäß einer Alternative mit der Membran optische Anzeigemittel in Verbindung stehen. Diese können insbesondere einen Zeiger umfassen.

Statt der optischen Anzeigemittel können gemäß Anspruch 4 aber auch elektrische Anzeigemittel vorgesehen sein, die durch die Membran steuerbar sind. Diese Anzeigemittel können beispielsweise in einer Leuchtanzeige bzw. LED in einem Stromkreis mit einem Schaltkontakt bestehen, der durch die Membran betätigt wird.

Ein Ausführungsbeispiel der Erfindung wird im folgenden anhand einer Zeichnung mit drei Figuren erläutert. Aus dieser Beschreibung können sich weitere Merkmale und Vorteile der Erfindung ergeben. Es zeigen:
- Fig. 1: eine schematische Darstellung des Wassersystems einer Espressomaschine, in dem ein Durchlauferhitzer angeordnet ist;
- Fig. 2: als Einzelheit hieraus eine Differenzdruckdose mit einer Federschnappscheibe als Membran in einem senkrechten Schnitt und
- Fig. 3: eine Seitenansicht der Differenzdruckdose nach Fig. 2.

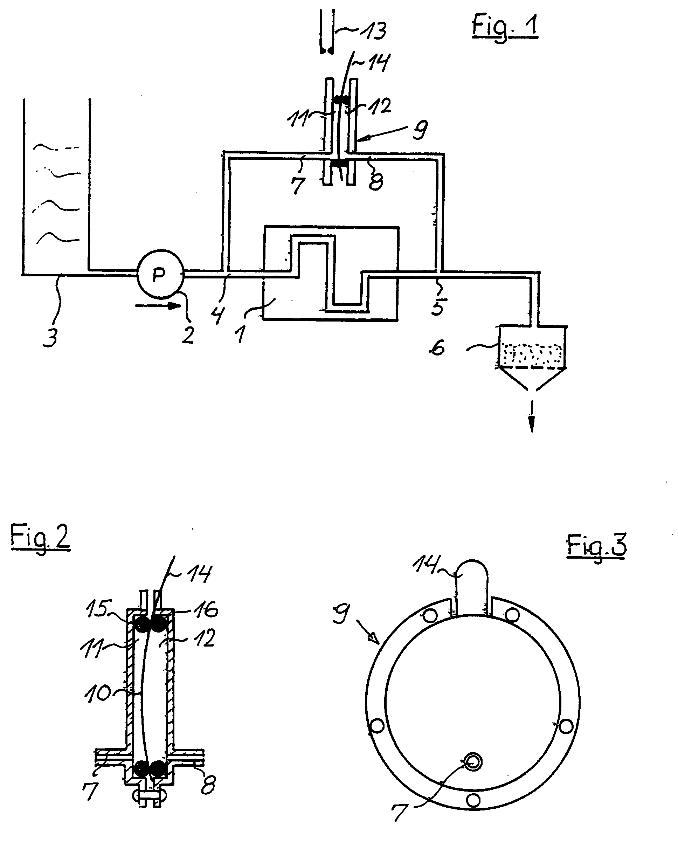

In Fig. 1 ist mit 1 ein Durchlauferhitzer bezeichnet, der über eine Pumpe 2 von einem Kaltwasserbehälter 3 gespeist wird, und zwar wird das Kaltwasser an einem Kaltwassereingang 4 eingespeist. Der Durchlauferhitzer 1 gibt das in ihm erhitzte Wasser über einen Heißwasserausgang 5 ab, der mit einem Brühkopf 6 einer Espressomaschine in fluidleitender Verbindung steht, um das in dem Brühkopf befindliche Kaffeemehl aufzubrühen. Bis hierhin ist der Aufbau der Einrichtung bekannt.

Zur Anzeige des Verkalkungszustands des Durchlauferhitzers 1 sind von dessen Kaltwassereingang 4 und Heißwasserausgang 5 Leitungen abgezweigt, die zu einem pumpenseitigen Wassereinlaufstutzen 7 und einem brühkopfseitigen Wasserauslaufstutzen 8 einer Differenzdruckdose 9 führen, die eine Meßkapsel darstellt. Die Meßkapsel 9 beinhaltet als wesentliches Element eine sphärisch vorgebogene Federschnappscheibe 10, die eine erste Druckkammer 11 von einer zweiten Druckkammer 12 trennt, in die jeweils der Wassereinlaufstutzen 7 bzw. der Wassereinlaufstutzen 8 münden. Die beiden Druckkammern können auch als Druckblasen bezeichnet werden.

Zu den Anzeigemitteln, die durch die Federschnappscheibe 11 gesteuert werden, gehört ein Schaltkontakt 13, der beispielsweise eine nicht dargestellte Leuchte in einem Stromkreis einoder ausschaltet. Hierzu wird der Schaltkontakt durch die Federschnappscheibe 10 betätigt, was in dem Ausführungsbeispiel durch einen Ansatz 14, der von der Meßkapsel herausragt, angedeutet ist.

In der Ruhelage, und wenn der Differenzdruck zwischen der ersten Druckkammer 11 und der zweiten Druckkammer 12 einen vorgegebenen Wert nicht überschreitet, nimmt die Federschnappscheibe 10 die in Fig. 2 dargestellte Lage ein. Diese Lage entspricht auch einem weitgehend oder vollständig verkalkungsfreien Zustand des Durchlauferhitzers, bei dem die Druckdifferenz zwischen der ersten Druckkammer 11 und der zweiten Druckkammer 12 entsprechend gering ist. Dabei wird der Schaltkontakt 13 nicht durch den Ansatz 14 der Federschnappscheibe 10 betätigt. Übersteigt hingegen der Strömungswiderstand in den Durchlauferhitzer 1 durch Verkalkung einen vorgegebenen Wert, so hat dies eine entsprechende Erhöhung der Druckdifferenz zwischen der ersten Druckkammer 11 und der zweiten Druckkammer 12 zur Folge. Infolgedessen schnappt die Federschnappscheibe 10 zu einer entgegengesetzten Krümmung als der in den Fig. 1 und 2 dargestellen, um und der Ansatz 14 schließt den Schaltkontakt 13. Dadurch kann der Verkalkungszustand, der eine Entkalkung nun wünschenswert macht, mittels weiteren elektrischen Anzeigemitteln visualisiert werden.

Aus Fig. 1 ist auch die Anordnung der Differenzdruckdose oberhalb des Durchlauferhitzers mit annähernd lotrechter Federschnappscheibe ersichtlich, so daß Restwasser aus den Druckkammern 11, 12 abläuft und zusätzlich aus diesen abgesaugt wird.

Aus Fig. 2 kann im einzelnen ersehen werden, wie die Federschnappscheibe in der Differenzdruckdose 9 zwischen zwei O-Ringen 15,16 gelagert ist, damit sie ihre Schnappfunktion erfüllen kann und die beiden Druckkammern 11 und 12 gegeneinander abdichtet.

### Zeichenagenda

- 1.: Durchlauferhitzer
- 2.: Pumpe
- 3.: Kaltwasserbehälter
- 4.: Kaltwassereinlass
- 5.: Heißwasserausgang
- 6.: Brühkopf
- 7.: Wassereinlaufstutzen - Pumpenseite
- 8.: Wassereinlaufstutzen - Brühkopfseite
- 9.: Differenzdruckmessdose
- 10.: Federschnappscheibe
- 11.: 1. Druckkammer
- 12.: 2. Druckkammer
- 13.: Schaltkontakt
- 14.: Ansatz
- 15.: O-Ring
- 16.: O-Ring

## Patentansprüche

1. Einrichtung zur Anzeige des Verkalkungszustands von Durchlauferhitzern, insbesondere von Espressomaschinen, wobei der Durchlauferhitzer einen Kaltwassereinlaß (4) und einen Heißwasserauslaß (5) aufweist, mit einem zwischen dem Heißwasserauslaß (5) und dem Kaltwassereinlaß (4) angeordneten Differenzdruckmesser und mit diesem gekuppelten Anzeigemitteln,
**dadurch gekennzeichnet,**
**daß** als Differenzdruckmesser eine Differenzdruckmeßdose (9) mit zwei Druckkammern (11, 12) und einer Membran zwischen der ersten Druckkammer (11) und der zweiten Druckkammer (12) vorgesehen ist, von denen die erste Druckkammer (11) mit dem Kaltwassereinlaß (4) und die zweite Druckkammer (12) mit dem Heißwasserausgang (5) fluidleitend verbunden ist, und daß die mit der Druckdifferenz zwischen der ersten Druckkammer (11) und der zweiten Druckkammer (12) beaufschlagte Membran als Federschnappscheibe (10) ausgebildet ist, die derart dimensioniert ist, daß sie bei Erreichen einer vorgegebenen Druckdifferenz umschnappt.

2. Einrichtung nach Anspruch 1,
**dadurch gekennzeichnet,**
**daß** die Differenzdruckmeßdose (9) oberhalb des Durchlauferhitzers (1) mit annähernd lotrecht orientierter Membran angeordnet ist.

3. Einrichtung nach Anspruch 1 oder 2,
**gekennzeichnet durch**
optische Anzeigemittel, die mit der Membran in Verbindung stehen.

4. Einrichtung nach Anspruch 1 oder 2,
**gekennzeichnet durch**
elektrische Anzeigemittel, die **durch** die Membran steuerbar sind.

## Claims

1. Device for indicating the limescale condition of continuous flow heaters, in particular espresso machines, such that the continuous flow heater has a cold water inlet (4) and a hot water outlet (5), with differential pressure measuring means arranged between the hot water outlet (5) and the cold water inlet (4) and with indicating means coupled to the said measuring means,
**characterised in that**
as the differential pressure measuring means a pressure measurement cell (9) with two pressure chambers (11, 12) and a membrane between the first pressure chamber (11) and the second pressure chamber (12) is provided, of which the first pressure chamber (11) is in fluid flow communication with the cold water inlet (4) and the second pressure chamber (12) with the hot water outlet (5), and the membrane acted upon by the pressure difference between the first pressure chamber (11) and the second pressure chamber (12) is formed as a spring snap-disc whose dimensions are such that when a specified pressure difference is reached, it snaps over to its other position.

2. Device according to Claim 1,
**characterised in that**
the differential pressure measurement cell (9) is arranged above the continuous flow heater (1) with its membrane orientated approximately vertically.

3. Device according to Claims 1 or 2,
**characterised in that**
it comprises optical indication means connected to the membrane.

4. Device according to Claims 1 or 2,
**characterised in that**
it comprises electrical indication means that can be controlled by the membrane.

## Revendications

1. Unité d'indication du degré de calcification de chauffe-eau à écoulement continu, en particulier de machines à café espresso, le chauffe-eau à écoulement continu possédant une entrée (4) pour l'eau froide et une sortie (5) pour l'eau chaude, cette unité comportant un appareil de mesure de pression différentielle, disposé entre la sortie (5) pour l'eau chaude et l'entrée (4) pour l'eau froide, ainsi que des moyens d'indication couplés à cet appareil, et étant
**caractérisée**
**en ce qu'**il y est prévu, comme appareil de mesure de pression différentielle, une boîte de mesure de pression différentielle (9) qui comporte deux chambres de pression (11, 12) et un diaphragme, placé entre la première chambre de pression (11) et la seconde chambre de pression (12), et dont la première chambre de pression (11) est raccordée à l'entrée (4) pour l'eau froide et la seconde chambre de pression (12) à la sortie (5) pour l'eau chaude, l'une et l'autre par une liaison conductrice de fluide, et en ce que le diaphragme, sollicité par la différence de pression entre la première chambre de pression (11) et la seconde chambre de pression (12), est réalisé sous forme d'un disque élastique à déclic (10), qui est dimensionné de telle façon à sauter brusquement lorsqu'une différence de pression prédéfinie est atteinte.

2. Unité selon la revendication 1,
**caractérisée**
**en ce que** la boîte de mesure de pression différentielle (9) est disposée au-dessus du chauffe-eau à écoulement continu (1), avec le diaphragme orienté à peu près verticalement.

3. Unité selon la revendication 1 ou 2,
**caractérisée par**
des moyens d'indication optiques, qui sont reliés au diaphragme.

4. Unité selon la revendication 1 ou 2,
**caractérisée par**
des moyens d'indication électriques, qui peuvent être commandés par le diaphragme.
